# NEUE EUROPÄISCHE PATENTSCHRIFT

(11) **EP 0 787 766 B2**
(45) Veröffentlichungstag und Bekanntmachung des Hinweises auf die Entscheidung über den Einspruch: **17.03.2004**
(45) Hinweis auf die Patenterteilung: 04.08.1999
(21) Anmeldenummer: 97101444.4
(22) Anmeldetag: 30.01.1997
(51) Int. Cl.: C08K 5/00, C08L 83/04

(54) **Bei Raumtemperatur vulkanisierende, kondensationsvernetzende Siliconkautschuke**
Ambient vulcanising silicone rubbers crosslinking by condensation mechanism
Caoutchouqes de silicone vulcanisant à température ambiante et réticulables par un mécanisme de condensation

(30) Priorität: 01.02.1996 DE 19603628
(43) Veröffentlichungstag der Anmeldung: 06.08.1997
(73) Patentinhaber: Wacker-Chemie GmbH, 81737 München (DE)
(72) Erfinder: Kollmann, Georg, Dr., 84489 Burghausen (DE); Puppe, Eva-Maria, 84547 Emmerting (DE); Pfeffer, Hans-Rudolf, 84547 Emmerting (DE)
(74) Vertreter: Deffner-Lehner, Maria, Dr.

(56) Entgegenhaltungen:
- WO-A-86/03120
- GB-A- 1 518 135
- JP-A- 1 240 548
- JP-A- 4 370 163
- RU-C- 2 048 497
- SU-A- 615 109
- US-A- 2 953 543
- US-A- 5 118 735
- US-A- 5 258 138
- US-A- 5 326 816
- DATABASE WPI Section Ch, Week 9629 Derwent Publications Ltd., London, GB; Class A60, AN 96-285478 XP002029504 & RU 2 048 497 C (AS USSR HETEROORGANIC CPDS INST) , 20.November 1995
- PATENT ABSTRACTS OF JAPAN vol. 013, no. 124 (C-580), 27.März 1989 & JP 63 295646 A (NOK CORP), 2.Dezember 1988,
- Ullmann s Encyclopedia of Industial Chemistry Vol. A20,1992, Weinheim, pages 468,472-475.
- Attestation de Christian Pusineri du 02.05.00.
- Attestation de Jean-Claude Sportes du 02.05.00
- Page de garde de la feuille de marche RTV 22504 lot nr. 1485100, 27.11.92
- Page de garde de la feuille de marche RTV 22504, lot nr. 3123000, 23.03.94
- Fiche technique Rhodorsil RTV 22504 du juin 1992 accessible au public.
- Fiche de données de sécurité du 25.06.92 Rhodorsil RTV 22504.
- Brochure technique commercial RTV-2 "For moulds and reproductions user s guide, Rhodorsil Silicones, Rhodorsil RTV 504-Rhone Poulenc, 1994.
- Fiche de données de sécurite, Tinuvin 123, Ciba-Geigy, 16.03.92. et"Product Specification" Tinuvin 123 Ciba-Geigy. 07.11.91
- Note interne du 18.12.92 prise d empreinte RTV 22504, Rapport de visite à la société Sic à Champagnole le 15.12.92.
- Facture du 19.05.94 libellée à l ordre de la société FB. Silbermann pour du Rhodorsil RTV 22504
- Facture du 15.08.94 libellée à l ordre de la société Stockmeier Chemie pour du Rhodorsil RTV 22504.

## Beschreibung

Die Erfindung betrifft bei Raumtemperatur vulkanisierende, kondensationsvernetzende Siliconkautschuk-Massen, ein Verfahren zu ihrer Herstellung, ihre Verwendung und Negativformen.

Die Verwendung von raumtemperaturvulkanisierenden Zweikomponenten-Siliconkautschuken als Werkstoff für die Herstellung elastischer Negativformen ist bekannt (siehe u.a. Noll, W., Chemie und Technologie der Silicone, Verlag Chemie, Weinheim, 2. Auflage 1964, S. 339 - 340). Mit Hilfe solcher Formen lassen sich selbst Formkörper mit hochkomplexen Oberflächenstrukturen unter Verwendung verschiedener Werkstoffe reproduzieren bzw. vervielfältigen. Neben der hohen Elastizität und mechanischen Festigkeit, die ein Entformen durch starkes Dehnen, ja sogar durch handschuhartiges Umstülpen ermöglichen, begründen die leichte Verarbeitbarkeit und hohe Wiedergabegenauigkeit in Verbindung mit der stark abweisenden Wirkung gegenüber den meisten gängigen Reproduktionswerkstoffen die führende Stellung der RTV-2 Siliconkautschuke als Formenmaterial im technischen und künstlerischen Bereich der Vervielfältigung von Objekten.

Einer der wichtigsten und am häufigsten genutzten Anwendungsbereiche für elastische Negativ-Formen aus RTV-2 Siliconkautschuk ist die Fertigung von Formteil-Kleinserien aus organischen Harzen, insbesondere ungesättigten Polyester- und Polyurethan-Harzen. Formteil-Kleinserien werden stets dann benötigt, wenn bei Vorliegen zahlreicher verschiedener Designs jeweils nur ein Bedarf an verhältnismäßig geringen Stückzahlen besteht, so daß die Anfertigung von Gieß- oder Spritzguß-Formen aus z.B. Metall wegen deren hoher Kosten unwirtschaftlich wird, z.B. bei der Herstellung von Prototypen, Bad- und Küchenmöbelfronten, Stilmöbeln, Bilder- und Spiegelrahmen, Werbeartikeln, Souvenirs u.ä. Um die Stückkosten so niedrig wie möglich zu halten, wird eine möglichst hohe Abformhäufigkeit, d.h. Anzahl von Reproduktionen pro Form, gefordert.

Allerdings ist die Lebensdauer elastischer Formen aus RTV-2 Siliconkautschuk begrenzt. Neben rein mechanischen Beschädigungen durch den Entformungsvorgang kommt es, abhängig vom Strukturierungsgrad der Formoberfläche, von Art und Zusammensetzung des Reproduktionswerkstoffes und von der Anzahl an Abgüssen pro Tag durch physikalische und chemische Einwirkungen zu einem zunehmenden Verlust der Trennfähigkeit. Dieser äußert sich durch einen wachsenden Kraftaufwand für die Entformung, bis es schließlich zu partiellen Anhaftungen des Gießlings an der Form kommt, so daß eine Entformung nur mehr unter Beschädigung der Formoberfläche möglich ist. Die Form hat das Ende ihrer Lebensdauer erreicht.

Im Falle der ungesättigten Polyesterharze dringt Styrol in die Grenzschicht der Kautschukform ein und polymerisiert teilweise innerhalb der Siliconkautschuk-Matrix zu Polystyrol unter Bildung eines interpenetrierenden Netzwerks aus Polydimethylsiloxan und Polystyrol, so daß der Polydimethylsiloxan-Anteil pro Volumenelement abnimmt. Dies führt zu einer Versprödung sowie zu einem Absinken der Trennfähigkeit der Formoberfläche. Die Form versagt entweder durch mechanische Beschädigung, da die versprödeten Formenpartien für das Gedehntwerden der Form während der Entformung der Harzgießlinge nicht mehr ausreichend elastisch sind, oder aber es kommt zu einem mehr oder minder großflächigen Aufwachsen eines Gießlings wegen nicht mehr ausreichender Trennfähigkeit der Formoberfläche.

Im Falle der Polyurethanharze kommt es zu einem chemischen Angriff der Isocyanatkomponente auf den Siliconkautschuk, d.h. zu einer Reaktion mit noch vorhandenen SiOH-Funktionen, z.B. aus der Hydrolyse überschüssigen Vernetzers, unter Bildung von Copolymerstrukturen, wodurch die Oberfläche der Form ebenfalls ihre Trennfähigkeit gegenüber dem Gießharz sukzessive verliert, bis ein Gießling aufwächst.

Je höher die Reaktionstemperatur des Gießharzes und je länger die Einwirkungsdauer auf die Kautschukform, desto stärker ist die Beanspruchung derselben, d.h. desto geringer wird die Anzahl der Gießlinge pro Form ausfallen.

Es hat daher nicht an Versuchen gefehlt, die Lebensdauer elastischer Formen aus RTV-2 Siliconkautschuk zu verlängern, u.a. durch Aufbringen einer zusätzlichen, gegenüber dem organischen Harz abweisend reagierenden Trennmittel-Schicht. Solche externe Trennmittel auf Basis von Wachsen, niedrig- bis hochmolekularen Siliconölen bzw. - harzen oder perfluorierten Kohlenwasserstoffen sind bekannt (z.B. Beck und Smith, EP 404325, und East, US 5380,478 ) und werden zum Teil von spezialisierten Herstellern wie z.B. Würtz, Acmos und Arti angeboten. Sie weisen jedoch deutliche Nachteile auf. Da sie meist nur als lösemittelhaltige Zubereitungen in dünner Schicht anwendbar sind, praktisch sämtliche der dafür geeigneten Lösungsmittel den vulkanisierten Siliconkautschuk aber stark anquellen, muß nach jedem Auftragen auf die Formoberfläche abgewartet werden, bis sich das Lösemittel vollständig aus dem Kautschukvulkanisat verflüchtigt hat, da noch Lösemittel enthaltende Formen merkliche Einbußen hinsichtlich ihrer Beständigkeit gegen organische Harze erleiden. Solche zusätzlich auf die Formoberfläche aufgebrachten Trennmittel müssen auch in der Regel nach jeder Entformung neu aufgetragen werden, da sie teilweise vom Gießling mitgenommen werden, was wiederum dessen überlackierbarkeit beeinträchtigen kann. Außerdem kommt es in schlecht zugänglichen Ecken und Hinterschneidungen zu einer Akkumulation des Trennmittels, wodurch sich die Abformgenauigkeit verringert. Der zusätzliche Arbeitsaufwand erhöht weiters die Stückkosten.

Diese Nachteile der externen Trennmittel versuchte man durch interne Trennmittel zu vermeiden. Solche Trennmittel, wie z.B. höhermolekulare Siliconöle oder Kohlenwasserstoffe, zeigen eine gewisse Unverträglichkeit mit dem Siliconkautschuk-Vulkanisat und migrieren deshalb an die Formoberfläche, wo sie einen extemen Trennmittelfilm bilden. Sie weisen zwar nicht den Nachteil der Notwendigkeit wiederholten Auftragens sowie des Gehaltes an quellenden Lösernitteln, aber doch die anderen oben erwähnten Nachteile externer Trennmittel auf.

Da der Angriff auf die Siliconkautschuk-Oberfläche, ob physikalisch oder chemisch, meist mit einem Quellungsprozeß des Vulkanisates verbunden ist, wurde weiter versucht, die Gießharzbeständigkeit durch optimierte Formulierungen der Siliconkautschuk-Abformmassen hinsichtlich Polymer/Vernetzer-Gehalt, Füllstoffart und -gehalt und Katalysatorart und -gehalt zu erhöhen (z.B. Smith, EP 586153; Frances, EP 378952; Gibard, EP 010478).

Alle erwähnten Methoden vermögen zwar die Beständigkeit von Formen aus RTV-2 Siliconkautschuk gegenüber organischen Harzen in gewissem Ausmaß zu verbessern, können aber hinsichtlich des Grades der Verbesserung und wegen Nachteilen hinsichtlich Verarbeitungsaufwand, Abformgenauigkeit oder Weiterverarbeitung der hergestellten Harz-Formteile nicht befriedigen.

Es ist daher Aufgabe der Erfindung, hinsichtlich ihrer Abformhäufigkeit gegenüber organischen Harzen, vorzugsweise ungesättigten Polyester- sowie Polyurethanharzen, verbesserte Negativ-Formen aus bei Raumtemperatur vulkanisierenden, kondensationsvernetzenden Siliconkautschuk-Massen zur Verfügung zu stellen. Diese Aufgabewird durch die Erfindung gelöst

Ein Gegenstand der Erfindung sind bei Raumtemperatur vulkanisierende, kondensationsvemetzende Siliconkautschuk-Massen A, die Zusatzstoffe B enthalten, die aus der Gruppe ausgewählt werden, die aus sterisch gehinderten Phenolen, sterisch gehinderten Bisphenolen, sterisch gehinderten Thiobisphenolen, Zinkdialkyldithiophosphaten, Zinkdiaryldithiophosphaten, aromatischen Aminen oder Zubereitungen, die die zuvor erwähnten Stoffe enthalten, besteht, wobei diese Zusatzstoffe einzeln oder in beliebigen Mischungen und Mischungsverhältnissen miteinander in den Massen A enthalten sein können.

Die bei Raumtemperatur vulkanisierende, kondensationsvernetzende Siliconkautschukmasse A sind die bei Raumtemperatur vulkanisierenden, kondensationsvernetzenden Siliconkautschuk-massen der folgenden Zusammensetzung enthaltend

### a) α,ω - Dihydroxypolydiorganosiloxane der allgemeinen Formel

HO - [R₂SiO]ₙ - H

wobei n > 10, bevorzugt 50 - 2 000, und besonders bevorzugt 100 - 1 000 ist, und R ein organischer, gegebenenfalls halogenierter Rest sein kann, der gleich oder verschieden sein kann.

Bevorzugt sind lineare Polymere mit mehr als 10 Diorganosiloxan-Einheiten, die an den beiden Kettenenden vorzugsweise eine Silanol-Gruppe (-SioH) aufweisen, und worin die Reste R bevorzugt gleiche oder verschiedene einwertige Kohlenwasserstoffreste mit 1 - 18 Kohlenstoffatomen sein können.

Beispiele für R sind Methyl-, Ethyl-, Phenyl-, Vinyl-oder Trifluoro-3,3,3-propyl-Reste, bevorzugt Methyl-, Vinyl-oder Phenylreste, besonders bevorzugt Methylreste mit einer bevorzugten Viskosität der α,ω-Dihydroxypolydiorganosiloxane zwischen 100 mPa·s und 500 000 mPa·s bei 23°C, besonders bevorzugt zwischen 500 mPa·s und 80 000 mPa·s bei 23°C.

### b) Vernetzer

(i) Silane der allgemeinen Formel

   R¹ ₐSi(OR²)₄₋ₐ

   wobei a gleich 0 oder 1, R¹ bevorzugt ein einwertiger, gegebenenfalls halogenierter Kohlenwasserstoffrest mit 1 - 8 Kohlenstoffatomen, und R² bevorzugt ein einwertiger Kohlenwasserstoffrest mit 1 - 4 Kohlenstoffatomen sein kann.
   Beispiele für R¹ sind Alkylreste wie Methyl-, Ethyl-, Propyl-, Butyl-, Pentyl-, Hexyl- oder Octylreste, Alkenylreste wie Vinyl- oder Allylreste, Arylreste wie Phenylreste, Aralkylreste wie Benzylreste, Alkarylreste wie Tolyl- oder Xylylreste, halogenierte Kohlenwasserstoffreste wie Chlormethyl- oder Trifluoro-3,3,3-propylreste, bevorzugt jedoch Methyl-, Ethyl-, n-Propyl-, Iso-propyl- oder n-Butylreste.
   Bevorzugte Beispiele für R² sind Methyl-, Ethyl-, n-Propyl-, Isopropyl- und n-Butyl-Reste.
   Konkrete Beispiele für monomere Silane der allgemeinen Formel R¹ₐSi(OR²)₄₋ₐ sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetran-propoxysilan, Tetra- n-butoxysilan und/oder
(ii) teilhydrolysierte Produkte von Silanen, wie unter (i) aufgeführt, wobei a = 0 oder 1 ist, enthaltend Einheiten ausgewählt aus der Gruppe der Einheiten der allgemeinen Formeln

   (R²O)₃SiO_{0.5}, (R²O)₂SiO, (R²O)SiO_{1.5} und SiO₂

   wobei R² die unter (i) angegebene Bedeutung hat.

Konkrete Beispiele für solche Oligosiloxane, die oft durch ihren Gehalt an SiO₂ in Gew.- % beschrieben werden, sind Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan,bevorzugt Hexaethoxydisiloxan, Hexa-n-propoxydisiloxan und Decaethoxytetrasiloxan.

Die Vernetzer (A)(b)(i) und (A)(b)(ii) werden bevorzugt in einem Mengenanteil von 0,5 - 10 Gew.- %, besonders bevorzugt 1 - 5 Gew.- %, in den erfindungsgemäßen Zubereitungen eingesetzt.

### c) Katalysatoren

(k) Organozinnverbindungen der allgemeinen Formel

   R'₂Sn(OCOR")₂

   worin R' ein einwertiger Kohlenwasserstoffrest mit 1 - 16 Kohlenstoffatomen, und R" ein Kohlenwasserstoffrest mit 1 - 19 Kohlenstoffatomen sein kann.
   Beispiele für R' sind bevorzugt Methyl-, Ethyl-, n-Propyl-, Isopropyl-, n-Butyl-, n-Octyl, n-Decyl-, n-Dodecyl-, n-Hexadecyl-, besonders bevorzugt Methyl-, n-Butyl-, n-Octyl.
   Beispiele für R" sind Alkyl-Reste wie Methyl-, 2-Ethylpentyl-, n-Heptyl-, n-Octyl-, 2,2-Di-methylheptyl-, n-Nonyl-, n-Undecyl-, n-Tridecyl-, n-Pentadecyl-, n-Heptadecyl-, n-Nonadecyl-, sowie ungesättigte Kohlenwasserstoffreste wie C₉H₁₉OOC-CH=CH-, CH₃-(CH₂)₇-CH=CH-(CH₂)₇-, bevorzugt Methyl-, 2-Ethylpentyl-, 2,2-Dimethylheptyl-, n-Undecyl-, n-Heptadecyl-, C₉H₁₉OOC-CH=CH-, CH₃-(CH₂)₇-CH=CH-(CH₂)₇-.
   Bevorzugte Beispiele für die unter (k) genannten Organozinnverbindungen der allgemeinen Formel R'₂Sn (OCOR")₂ sind Dimethylzinndi-2-ethylhexoat, Dimethylzinndilaurat, Di-n-butylzinndiacetat, Di-n-butylzinndi-2-ethylhexoat, Di-n-butylzinndicaprylat, Di-n-butyl- zinndi-2,2-dimethyloctoat (Di-n-butylzinnversatat®), Di-n-butylzinndilaurat, Di-n-butylzinn-distearat, Di-n-butylzinndimaleinat, Di-n-butylzinndioleat, Di-n-butylzinndiacetat, Di-n-octylzinndi-2-ethylhexoat, Di-n-octylzinndi-2,2-dimethyloctoat (Di-n-octylzinnversatat®), Di-n-octylzinndimaleinat und Di-n-octylzinndilaurat, besonders bevorzugt Di-n-butylzinndi-2-ethylhexoat, Di-n-butylzinndicaprylat, Di-n-butylzinndi-2,2-dimethyloctoat (Di-n-butylzinnversatat®), Di-n-butylzinndilaurat, Di-n-octylzinn-di-2-ethylhexoat, Di-n-octylzinndimaleinat und Di-n-octylzinndilaurat
   und/oder
(kk)Reaktionsgemische von unter (k) aufgeführten Organozinnverbindungen mit unter (i) aufgeführten Silanen oder unter (ii) aufgeführten teilhydrolysierten Produkten von Silanen.

Bei den als Katalysatoren unter (A) (c) (kk) aufgeführten Reaktionsgemischen von unter (A) (c) (k) aufgeführten Organozinnverbindungen mit unter (A)(c)(i) aufgeführten Silanen oder unter (A)(C)(ii) aufgeführten teilhydrolysierten Produkten von Silanen (z.B. Hechtl, EP 50358) handelt es sich vorzugsweise um Gemische von Umsetzungsprodukten der unter (A)(c)(i) aufgeführten Silane oder unter (A)(c)(ii) angeführten teilhydrolysierten Produkte von Silanen mit den unter (A) (c) (k) aufgeführten Organozinnverbindungen. Die Umsetzung kann dabei bei Raumtemperatur, vorzugsweise jedoch bei Temperaturen um den Siedepunkt des Kieselesters erfolgen. Der bei der Reaktion gebildete Carbonsäurealkylester kann im Reaktionsgemisch verbleiben oder vorzugsweise destillativ entfernt werden.

Beispiele für solche Reaktionsgemische sind Umsetzungsprodukte von Tetraethoxysilan bzw. Hexaethoxydisiloxan bzw. Ethoxyoligosiloxan mit ca. 40 Gew.- % SiO₂ bzw. Tetra-n-propoxysilan bzw. Tetra-n-butoxysilan mit Di-n-butylzinndiacetat bzw. Di-n-octylzinndiacetat bzw. Di-n-butylzinndilaurat bzw. Di-n-octylzinndilaurat.

Bevorzugt sind Umsetzungsprodukte von Tetraethoxysilan mit Di-n-butylzinndiacetat, von Hexaethoxydisiloxan mit Di-n-butylzinndiacetat, von Tetra-n-propoxysilan mit Di-n-butylzinndiacetat, von Tetra-n-butoxysilan mit Di-n-butylzinndiacetat, von Tetraethoxysilan mit Di-n-butylzinndicaprylat, von Tetraethoxysilan mit Di-n-butylzinndilaurat, von Hexaethoxydisiloxan mit Di-n-butylzinndilaurat, von Tetra-n-propoxysilan mit Di-n-butylzinndilaurat und von Tetraethoxysilan mit Di-n-octylzinndiacetat.

Die unter (A)(c)(i) aufgeführten Silane oder unter (A)(c)(ii) aufgeführten teilhydrolysierten Produkte von Silanen werden zur Herstellung der unter (kk) aufgeführten Reaktionsgemische in Mengen von bevorzugt 0,5 - 10 Gew.-Teilen, besonders bevorzugt 2 - 6 Gew.-Teilen, je Gewichtsteil der unter (A) (c) (k) aufgeführten Organozinnverbindung eingesetzt.

Die als Katalysatoren unter (A) (c) (k) genannten Organozinnverbindungen der allgemeinen Formel R'₂Sn (OCOR")₂ sowie die unter (A) (c) (kk) aufgeführten Reaktionsgemische von unter (A) (c) (k) aufgeführten Organozinnverbindungen mit unter (A)(c)(i) aufgeführten Silanen oder unter (A)(c)(ii) angeführten teilhydrolysierten Produkten von Silanen.können einzeln oder in Abmischung untereinander und miteinander zum Einsatz kommen, und zwar in einem Mengenanteil von vorzugsweise 0,2 - 2 Gew.-%, bevorzugt 0,3 - 1,4 Gew.- %.

Zu den für jede kondensationsvernetzende RTV-2 Kautschukmasse enthaltenen Bestandteilen Polymer, Vernetzer und Katalysator kommen gegebenenfalls weitere Zusatzstoffe, um die Leistungsfähigkeit des Produktes im technisch erforderlichen Maße zu gewährleisten, so z.B. Füllstoffe, Weichmacher, Topfzeitregler, Wasser und weitere Zusatzstoffe.

### d) gegebenenfalls Füllstoffe mit oder ohne Oberflächenbehandlung

(I) verstärkende (aktive) Füllstoffe
   Beispiele für die unter (A)(d)(I) genannten verstärkenden (aktiven) Füllstoffe sind pyrogenes, also in der Flamme hergestelltes, oder gefälltes Siliciumdioxid sowie pyrogenes Titandioxid mit BET-Oberflächen von 50 - 300 m²/g.
   Da diese verstärkenden Füllstoffe die Viskosität der Kautschukmasse stark erhöhen und außerdem bei Lagerung der Massen zu einer Pseudovernetzung über H-Brücken führen, muß ihre Oberfläche zur Herstellung fließfähiger Produkte hydrophobiert werden. Dafür können Organosiliciumverbindungen wie z.B. Chlorsilane, Diorganopolysiloxane, Diorganocyclopolysiloxane, Diorganocyclopolysilazane oder Alkyldisilazane eingesetzt werden.
   Die Behandlung der Füllstoffoberfläche kann "in situ", also durch Zusatz des Hydrophobiermittels zum Gemisch aus Polymer und Füllstoff erfolgen, oder in einem getrennten Schritt, so daß der bereits hydrophobierte Füllstoff dem Polymer zugesetzt wird.
   Für die erfindungsgemäßen Erzeugnisse wird bevorzugt pyrogenes Siliciumdioxid mit BET-Oberflächen von 90 - 170 m²/g, das mit Hexamethyldisilazan hydrophobiert wurde, eingesetzt
   und/oder
(II) nicht verstärkende (inaktive) Füllstoffe
   Die unter (A) (d) (II) genannten nicht verstärkenden (inaktiven) Füllstoffe weisen vorzugsweise Partikelgrößen zwischen 0,05 µm und 300 µm auf, besonders bevorzugt zwischen 0,1 µm und 50 µm (für Faser-Füllstoff zwischen 50 µm und 200 µm).

Beispiele für die unter (A) (d) (II) genannten nicht verstärkenden (inaktiven) Füllstoffe sind Quarzmehl, Christobalitmehl, Diatomeenerde, Glimmer, Aluminiumsilikate, Magnesium-Aluminiumsilikate, Zirkoniumsilikate, Calciumcarbonate (auch gecoatete Qualitäten), Eisenoxide, Titanoxide, Aluminiumoxide, Zirconiumoxide, Gips, Annalin, Bariumsulfat, Borcarbid, Bornitrid, Graphit, Xohlefasern, Glasfasern oder Glashohlkugeln, deren Oberfläche ebenfalls mit den unter (A) (d) (I) erwähnten hydrophobierenden Organosiliciumverbindungen behandelt sein kann.

Die unter (A) (d) (I) und (A) (d) (II) genannten Füllstoffe können sowohl einzeln als auch in Kombination miteinander und/oder untereinander eingesetzt werden, wobei Art und Menge der verwendeten Füllstoffe davon abhängen, ob gießbare, streichbare, streichbar-standfeste (d.h. in einer Schichtdicke von bis zu mehreren Zentimetern nicht von einer senkrechten Fläche ablaufende bzw. absackende) oder knetbare Zubereitungen gewünscht sind. Verstärkende Füllstoffe werden eingesetzt, wenn hoch ein- und weiterreißfeste Vulkanisate resultieren sollen, wobei der Anteil an dieser Füllstoff-Kategorie bei Gießmassen durch ihre stark viskositätserhöhende Wirkung auf max 25 Gew-% begrenzt wird.

Der gesamte Mengenanteil an den unter (A) (d) (I) und (A) (d) (II) genannten Füllstoffen beträgt vorzugsweise 1 - 80 Gew.- %, bevorzugt 5 - 50 Gew.- %.

### e) gegebenenfalls Weichmacher

(m) vorzugsweise kettenförmige Polydiorganosiloxane der allgemeinen Formel

   X - [R₂SiO]ₙ - Y

   wobei n > 2 ist, bevorzugt 5 - 200, besonders bevorzugt 30 - 150, R die oben angegebene Bedeutung hat, X einen Triorganosiloxy-Rest darstellt, bevorzugt Trimethylsiloxy-, Vinyldimethylsiloxy- oder Phenyldimethylsiloxy-, und Y einen Triorganosilyl-Rest darstellt, bevorzugt Trimethylsilyl-, Vinyldimethylsilyl- oder Phenyldimethyl-, aber auch H sein kann, mit einer Viskosität von vorzugsweise 5 - 1000 mPa·s bei 23°C, bevorzugt 35 - 350 mPa·s bei 23°C, in einem Mengenanteil von vorzugsweise 1 - 60 Gew.-%, bevorzugt 3 - 30 Gew.-%.

Y kann bevorzugt auch H sein, d.h. es kann sich um Polydiorganosiloxane handeln, die an einem Kettenende einen der angeführten Triorganosiloxy-Substituenten, am anderen Kettenende jedoch zum Teil oder durchwegs eine SiOH-Funktion aufweisen. Sie können über diese im kondensationsvernetzenden System reaktive Gruppe einseitig einvernetzt sein und somit keine Tendenz zum Ausschwitzen aus dem Vulkanisat zeigen: außerdem stellen sie, vor allem bei niedrigen Kettenlängen, eine Kombination aus einem Weichmacher und einem Topfzeitregler, wie er unter (A)(f) erwähnt wird, dar.

Die unter (A) (e) erwähnten Weichmacher werden sowohl zur Absenkung der Vulkanisathärte als auch, bei Gießmassen, zur Verringerung der Viskosität und damit zur Erhöhung der Fließfähigkeit eingesetzt. Ihre Einsatzmenge wird durch ihren negativen Einfluß auf Reißfestigkeit und Weiterreißwiderstand des Vulkanisates beschränkt.

Die unter (A) (e) angeführten Weichmacher besitzen eine Viskosität von bevorzugt 5 - 1000 mPa·s bei 23°C, besonders bevorzugt 35 - 350 mPa·s bei 23°C, und werden in einem Mengenanteil von bevorzugt 1 - 60 Gew.- %, besonders bevorzugt 3 - 30 Gew.- %, eingesetzt.

### f) gegebenfalls Topfzeitregler

α, ω- Dihydroxypolydiorganosiloxane der allgemeinen Formel

HO - [R₂SiO]ₙ - H

wobei n > 8 und < 220 ist, und R die oben angegebene Bedeutung hat, mit einer Viskosität von vorzugsweise 10 - 1000 mPa·s bei 23°C, bevorzugt 20 - 500 mPa·s bei 23°C, in einem Mengenanteil von 0,1 - 10 Gew.- %, bevorzugt 0,2 - 3 Gew.- %.

Auf Grund ihrer vergleichsweise geringen Kettenlänge weisen sie relativ hohe SiOH-Gehalte zwischen vorzugsweise 0,22 und 5 Gew.- % auf, bevorzugt 0,28 - 4 Gew.- %.

### g) gegebenfalls Wasser

in Substanz, oder als Teil einer Emulsion, oder als Teil einer Füllstoff-Zubereitung, in einem Mengenanteil von 0,005 - 1 Gew.- %, bevorzugt 0,02 - 0,2 Gew.- %.

Die unter (A) (c) angeführten Organozinn-Katalysatoren werden erst durch Hydrolyse in die katalytisch wirksame Spezies übergeführt. Die Hydrolyse kann durch die in der Umgebungsluft vorhandene Feuchtigkeit erfolgen, die auf Grund der hohen Wasserdampfdurchlässigkeit des Siliconkautschuks in diesen eindiffundiert. Bei Schichtdicken > 1 cm dauert dieser Diffusionsprozeß jedoch zu lange, um eine gleichmäßige, schnelle Durchvulkanisation gewährleisten zu können. Oft enthalten jedoch die in der Kautschukmasse zum Einsatz kommenden Bestandteile (A) (a), (A) (d)(II), (A) (e) und (A) (f) genügend Wasser. Falls das nicht zutrifft. wird Wasser oder, um eine homogenere Verteilung im Kautschuk zu erreichen, eine Wasser/Polydiorganosiloxan-Emulsion oder eine Wasser/Füllstoff-Zubereitung eingesetzt, wobei der Mengenanteil, bezogen auf Wasser, zwischen vorzugsweise 0,005 und 1 Gew.-%, bevorzugt 0,02 - 0,2 Gew.- % beträgt.

### h) gegebenfalls weitere Zusatzstoffe

Im Einzelfall können weitere Zusatzstoffe eingesetzt werden, z.B. lösliche und unlösliche Farbpigmente, DuftStoffe, Antistatika, Konsistenzregler wie z.B. Standfest-Additive, "innere" Trennmittel (z.B. zum Ausschwitzen neigende hochmolekulare Polydiorganosiloxane oder organische öle, Fette oder Wachse), organische, mit Siliconpolymeren verträgliche, also nicht ausschwitzende Weichmacher (z.B. Alkylphtalate, lineare und verzweigte Alkylaromaten mit C₁₂ - C₁₈ - Seitenketten oder Polyisobutylene) etc.

Die Zusammensetzung der bei Raumtemperatur vulkanisierenden kondensationsvemetzenden Kautschukmasse ist jedoch nicht entscheidend für die Wirksamkeit der erfindungsgemäßen Additive (B), d.h. diese bewirken stets den erfindungsgemäßen Vorteil gegenüber der die Additive (B) nicht enthaltenden Kautschukmasse mit ansonsten identischer Zusammensetzung.

### (B) als erfindungsgemäße Zusatzstoffe

I) Substanzen aus den Gruppen
   (x) sterisch gehinderte Phenole, Bisphenole oder Thiobisphenole
      Beispiele für diese Substanzgruppe sind bevorzugt 2,6-Di-t-butylphenol, 2,6-Di-t-butyl-4-methylphenol, Octadecyl -3,5-di-t-butyl-4-hydroxyhydrocinnamat, 4,4'-Methylen-bis(2,6-di-t-butylphenol), 2,2'-Methylen-bis (4-methyl-6-t-butylphenol), Monomethacrylat-ester von 2,2'-Methylen-bis(4-methyl-6-1-butylphenol), 1,3,5-Trimethyl-2,4,6-tris(3,5-di-t-butyl-4-hydroxybenzyl)benzol und 4,4'-Thio-bis(4,6-di-t-butylphenol).
      Besonders bevorzugte Verbindungen sind die sterisch gehinderten Phenole 2,6-Di-t-butylphenol und 2,6-Di-t-butyl-4-methylphenol sowie die sterisch gehinderten Bisphenole 4,4'-Methylen-bis (2,6-di-t-butyl-phenol) und 2,2'-Methylen-bis(4-methyl-6-t-butylphenol).
      Die unter (B)(I)(x) genannten sterisch gehinderten Phenole, Bisphenole oder Thiobisphenole werden in einem Mengenanteil von vorzugsweise 0,005 - 0,3 Gew.- %, bevorzugt 0,01 - 0,1 Gew.- %, zugesetzt. und/oder
   (y) Zinkdialkyl- bzw. Zinkdiaryldithiophospate der allgemeinen Formel

      Zn[S-P(S)-(OR³)₂)]₂

      worin R³ ein einwertiger Kohlenwasserstoffrest mit 1 - 14 Kohlenstoffatomen, bevorzugt Methyl-, Ethyl-, n-Propyl-, n-Butyl-, n-Pentyl-, n-Hexyl-, 2-Ethylhexyl-, n-Octyl-, Phenyl-, Tolyl- sein kann.
      Bevorzugte Verbindungen sind Zinkdi-n-hexyldithiophosphat, Zinkdi-2-ethylhexyldithiophosphat und Zinkdiphenyldithiophosphat.
      Die unter (B)(I)(y) genannten Zinkdialkyl- bzw. Zinkdiaryldithiophospate werden in einem Mengenanteil von vorzugsweise 0,005 - 0,3 Gew.- %, bevorzugt 0,02 - 0,2 Gew.- %, zugesetzt und/oder
   (z) aromatische Amine.
      Beispiele für diese Substanzgruppe sind N-Phenylbenzylamin, N-Phenyl-1-naphtylamin, 4,4'-Di(α,α'-dimethylbenzyl)diphenylamin, 4,4'-Di(2,4,4-Trimethylpentyl)diphenylamin, N,N'-Diphenyl-1,4-phenylendiamin, N-Phenyl-N'-(1,3-Dimethylbutyl)-1,4-phenylendiamin und (4-Anilinophenyl)methacrylat.
      Bevorzugte Verbindungen sind N-Phenylbenzylamin und N-Phenyl-1-naphtylamin.
      Die unter (B)(I)(z) genannten aromatischen Amine werden in einem Mengenanteil von vorzugsweise 0,001 - 0,1 Gew.- %, bevorzugt 0,005 - 0,05 Gew.- %, eingesetzt.
   und/oder
II) Zubereitungen, die die unter (I)(x-z) aufgeführten Substanzen einzeln oder in Kombination in den erfindungsgemäßen Mengen enthalten.
   Wirksam im Sinne der vorliegenden Erfindung sind nicht nur die einzelnen unter (B)(I) genannten Substanzgruppen, sondern in ebensolcher Weise die unter (B)(II) aufgeführten, solche unter (B)(I) genannte Substanzen einzeln oder in Kombination in den erfindungsgemäßen Mengen enthaltenden Zubereitungen, wie z.B. übliche Additive für Polymere, Kunststoffe und Schmierstoffe.

Die erfindungsgemäßen Zusatzstoffe können sowohl in Substanz als auch, aufgrund der besseren Dosierbarkeit bevorzugt, in Trägermitteln verwendet werden, mit denen sie homogene Mischungen bilden. Als solche Trägermittel sind wegen ihrer guten Verträglichkeit mit dem RTV-2 Siliconkautschuk Siliconöle und organische öle bevorzugt.
Teilweise werden die erfindungsgemäßen Zusatzstoffe direkt in den Trägermitteln hergestellt, und sind im Handel nur als Gemische mit den Trägermitteln zu erhalten.

Die erfindungsgemäßen Zusatzstoffe, Substanzen bzw. Zubereitungen sind u.a. beschrieben in Ullmann, Encyclopedia of Industrial Chemistry, Verlag Chemie, Weinheim, 5. Auflage 1985, unter "Antioxidants", Punkt 4 "Practices in Stabilization with Antioxidants", Vol. A 3, S. 104 ff.: W.J. Bartz, Additive für Schmierstoffe, Band 2, Vincentz-Verlag, Hannover, 1984.

Zwar ist der Einsatz derartiger Stoffe wie der erfindungsgemäßen Zusatzstoffe als Antioxidantien in additionsvernetzenden Organosiloxan-Zubereitungen bereits bekannt, allerdings ausschließlich zur thermischen Stabilisierung dieser Zubereitungen bzw. der daraus hergestellten Formteile (Burnier, US 5118735) sowie zur oxidativen Stabilisierung eines Nicht-Silicon-Bestandteiles, nämlich Paraffin, während der Lagerzeit (Yoshino et al., US 4879339).

Überraschenderweise bewirkt diese Wirkstoffgruppe auch eine deutliche Erhöhung der Beständigkeit von Formen aus bei Raumtemperatur vulkanisierenden kondensationsvernetzenden Siliconkautschuken gegen organische Gießharze, insbesondere ungesättige Polyesterharze und Polyurethanharze, und ermöglicht dadurch eine Steigerung der Abformzahlen, d.h. der aus einer Form erzielbaren Gießharz Formteile um durchschnittlich 50 % und eine Verlängerung der Lebensdauer der Formen.

Ein weiterer Gegenstand der Erfindung ist ein Verfahren zur Herstellung von bei Raumtemperatur vulkanisierende kondensationsvernetzende Siliconkautschuk-Massen, wobei die Bestandteile A (a-c) und ggf. (d-h) sowie B vermischt werden.

Die erfindungsgemäßen Massen können einfach durch Vermischen der verschiedenen Bestandteile mit Hilfe geeigneter Einrichtungen, wie z. B. Planetenmischer, Planetendissolver oder Kneter, hergestellt werden, wobei vorteilhafterweise zuerst die Polymere (A)(a) und gegebenenfalls die Füllstoffe (A)(d) miteinander in möglichst steifer Phase vermischt werden. Dies kann bei Raumtemperatur, besser jedoch bei Temperaturen über 70°C geschehen. Zu dieser Grundmischung werden dann bei Temperaturen unter 40°, vorzugsweise jedoch bei Raumtemperatur, gegebenenfalls die übrigen unter (A) und (B) aufgeführten Bestandteile zugesetzt und eingemischt.

Da jedoch nach Zusatz von Vernetzern, wie unter (A)(b), und Katalysatoren, wie unter (A)(c) aufgeführt, die Vulkanisationsreaktion unmittelbar einsetzt, und somit die Massen innerhalb der jeweiligen Topfzeit sogleich verarbeitet werden müssen, d.h. keine Lagerbeständigkeit gegeben ist, werden üblicherweise die Mischungsbestandteile so auf zwei Komponenten aufgeteilt, daß diese eine ausreichende Lagerstabilität von mehreren Monaten, vorzugsweise mehreren Jahren aufweisen, nach dem Vermischen jedoch sofort die gewünschte Vernetzungsreaktion bereits bei Raumtemperatur zeigen.

So ist es z.B. möglich, die Mischungsbestandteile (A)(a), (A)(b), (A)(d), (A)(e), (A)(f), (A)(g), (A)(h) und (B) in einer Komponente, der Kautschukmasse, zusammenzufassen, und als zweite Komponente den Katalysator (A)(c) einzusetzen.

Weiters ist es z.B. möglich, die Mischungsbestandteile (A)(a), (A)(d), (A)(e), (A)(f), (A)(g) und (A)(h) als Kautschukmasse, und (A)(b), (A)(c), gegebenenfalls eine Teilmenge von (A)(e) sowie (B) als Härter zusammenzufassen, wobei letztere Möglichkeit bevorzugt ist.

Im Verwendungsfalle der erfindungsgemäßen Zubereitungen werden dann die beiden Komponenten homogen durch Rühren, Kneten oder Walzen miteinander vermischt.

Je nach ihrer Zusammensetzung können die beiden Komponenten eine gießbare, streichbare, streichbar-standfeste (d.h. in einer Schichtdicke bis zu mehreren Zentimetern nicht von vertikalen Flächen ablaufende oder absackende) oder knetbare Konsistenz aufweisen, wobei für gießbare Komponenten ein Viskositätsbereich zwischen 1 mm²/s bei 23°C und 200 000 mPa·s bei 23°C bevorzugt wird.

Ebenfalls abhängig von ihrer Zusammensetzung können die erfindungsgemäßen Massen nach dem Vermischen der beiden Komponenten Verarbeitungs- oder Topfzeiten vorzugsweise zwischen 30 Sekunden und 8 Stunden, bevorzugt jedoch zwischen 2 Minuten und 3 Stunden, aufweisen, wobei unter Verarbeitungszeit die Zeitspanne zu verstehen ist, innerhalb der die Kautschukmasse eine für die jeweilige Verarbeitung geeignete Konsistenz besitzt.

So sollte z.B. eine Gießmasse im Hinblick auf gute Fließfähigkeit und Entlüftung, worunter das Entweichen der beim Vermischen der beiden Komponenten zwangsläufig eingerührten Luft in Blasenform zu verstehen ist, innerhalb der Verarbeitungszeit eine Viskosität von vorzugsweise 150 000 mPa·s bei 23°C, bevorzugt 100 000 mPa·s bei 23°C, nicht überschreiten.

Ein weiterer Gegenstand der Erfindung ist die Verwendung der bei Raumtemperatur vulkanisierenden kondensationsvernetzenden Siliconkautschuk-Massen zur Herstellung von Formen.

Die erfindungsgemäßen Zubereitungen werden vorzugsweise zur Herstellung elastischer Formen, wie z.B Negativformen, eingesetzt, eignen sich jedoch grundsätzlich für alle Anwendungen, für die kondensationsvernetzende RTV-2 Siliconkautschuke (d.h. bei Raumtemperatur vernetzende Massen aus 2 Komponenten) eingesetzt werden können, so z.B. für das Vergießen bzw. Einbetten elektrischer oder elektronischer Bauteile, Verklebung und Beschichtung verschiedener Werkstoffe, Herstellung von Siliconkautschuk-Formteilen und Dichtungen etc.

Ein weiterer Gegenstand der Erfindung sind Negativformen aus bei Raumtemperatur vulkanisierenden, kondensatiönsvernetzenden Siliconkautschuk-Massen.

Die aus den erfindungsgemäßen Zubereitungen bevorzugt hergestellten gummielastischen Negativformen dienen zur Reproduktion beliebiger Originale bzw. Modelle in allen gängigen Reproduktionsmaterialien, wie z.B. Gips, Beton, Kunststein, Wachs, niedrigschmelzende Metallegierungen, organische Gießharze und Gießharzschäume wie ungesättigte Polyesterharze, Polyurethanharze, Epoxidharze und, eingeschränkt, Methylmethacrylatharze sowie Thermoplaste wie Polyethylen, Polypropylen, Polyamide, Polystyrol, Polyvinylchlorid etc.

Bevorzugt im Sinne der vorliegenden Erfindung sind ungesättigte Polyesterharze und Polyurethanharze.

Formen, die aus den erfindungsgemäßen Zubereitungen hergestellt wurden, weisen gegenüber Formen aus vergleichbaren RTV-2 Siliconkautschuken, die die erfindungsgemäßen Additive (B) nicht enthalten, eine deutlich höhere Beständigkeit gegen die in den ungesättigten Polyester- und Polyurethanharzen enthaltenen aggressiven Bestandteile auf, und ermöglichen so um mindestens 50 % höhere Abformzahlen, d.h. pro Form können um durchschnittlich 50 % mehr Gießharz-Formteile hergestellt werden, bevor es durch Anhaften der Harz-Gießlinge oder Ab- bzw. Ausreißen von Teilen der Kautschukform zu einem Versagen derselben kommt.

Die nachfolgenden Beispiele sollen die Erfindung verdeutlichen. Alle Angaben von Teilen und Prozentsätzen beziehen sich auf das Gewicht, sofern nicht anders angegeben.

### Vergleichsbeispiel 1a

4000 g eines α,ω-Bis(trimethylsiloxy)polydimethylsiloxans mit einer Viskosität von 100 mm²/s bei 23°C und 4000 g einer mit Hexamethyldisilazan hydrophobierten pyrogenen Kieselsäure mit einer BET-Oberfläche von ca. 150 m²/g wurden in einem Kneter vermischt und danach 2 Stunden bei 130°C geknetet. Anschließend wurden 2500 g eines α,ω-Dihydroxypolydimethylsiloxans mit einer Viskosität von 6 000 mPa·s bei 23°C und 500 g eines α,ω-Dihydroxypolydimethylsiloxans mit einer Viskosität von 20 000 mPa·s bei 23°C zugemischt.

4500 g dieser Grundmischung wurden in einem Planetenmischer mit 2500 g Quarzmehl mit einer mittleren Partikelgröße von 5 µm, 1500 g eines α,ω-Dihydroxypolydimethylsiloxans mit einer Viskosität von 20 000 mPa·s bei 23°C, 1500 g eines α,ω-Bis(trimethylsiloxy)polydimethylsiloxans mit einer Viskosität von 35 mm²/s bei 23°C, 200 g einer Zubereitung aus 100 g gefälltem Titandioxid und 100 g eines α,ω-Bis(trimethylsiloxy)polydimethylsiloxans mit einer Viskosität von 100 mm²/s bei 23°C, 50 g eines α,ω-Dihydroxypolydimethylsiloxans mit einer Viskosität von 40 mm²/s bei 23°C und 5 g einer Wasser/α,ω-Bis(trimethylsiloxy)polydimethylsiloxan-Emulsion mit einem Wasseranteil von 65% gründlich vermischt. Die resultierende Kautschukmasse wies eine Viskosität von 27 000 mPa·s bei 23°C auf.

In 500 g dieser Kautschukmasse wurden 25 g einer Härtermischung bestehend aus 6 g Tetraethoxysilan, 2 g Dibutylzinndilaurat und 17 g eines α,ω-Bis(trimethylsiloxy)polydimethylsiloxans mit einer Viskosität von 35 mm²/s bei 23°C homogen mit einem mechanischen Rührwerk eingemischt.

Die katalysierte Mischung mit einer Viskosität von ca. 23 000 mPa·s und einer Verarbeitungszeit von 30 min bei 23°C wurde bei einem vermindertem Druck von 15 mbar von der eingemischten Luft befreit. Die daraus hergestellten Testformen waren nach 5 h klebfrei ausvulkanisiert und konnten vom Modell abgenommen werden.

Das Vulkanisat wies eine Shore A - Härte von 26 und einen Weiterreißwiderstand nach ASTM 624 B von 21 N/mm auf.

Als Modell diente ein glockenförmiger Gipskörper mit einer Höhe von 10 cm, einem mittleren Durchmesser von 7 cm und einem Volumen von ca. 500 cm³, dessen Oberfläche Vertiefungen mit unterschiedlichen Dimensionen und Strukturen aufwies, die so ausgebildet waren, daß die Oberfläche der damit erhaltenen Kautschukform eine Anzahl von filigranen Kanten, kegelförmigen Spitzen und engen Hinterschneidungen aufwies. Da diese erhabenen Strukturen fast vollständig vom Gießharz umflossen wurden, mußte auch die Quellung bzw. der chemische Angriff durch die aggressiven Gießharzbestandteile extrem stark ausfallen.

Die Testformen wurden als einteilige Hautformen mit zweiteiligen Stützformen aus Gips im Gießverfahren hergestellt. 20 Stunden nach der Entformung vom Modell erfolgte die Erstbefüllung mit Gießharz. Die Formen wurden zweimal täglich mit ca. 450 cm³ Gießharz befüllt. Die Harzgießlinge verblieben jeweils 2 Stunden zur Aushärtung in der Form. Die Entformung der Harzgießlinge wurde durch Umstülpen der Hautform vorgenommen, um eine maximale mechanische Belastung der Form zu erhalten. Über Nacht sowie über die Wochenenden wurden die Formen offen bei Raumtemperatur gelagert.

Als Gießharze wurden ungefüllte Typen mit hoher Reaktionswärme gewählt, so daß in Verbindung mit dem relativ großen Volumen der Gießlinge eine hohe Reaktionstemperatur bei der Aushärtung der Gießlinge und somit eine Höchstbeanspruchung der Formenoberfläche gegeben war.

Als ungesättigtes Polyesterharz wurde PALATAL P 4 (Hersteller: BASF) ohne Füllstoffe mit einer Viskosität von 650 mPa·s und einem Styrolanteil von 35 % verwendet. Die Verarbeitung erfolgte mit 1 % Härter Butanox M 50 (2-Butanon-Peroxid in Dimethylphtalat) und 0,25 % Beschleuniger Cobaltnaphtenat, wobei eine maximale Reaktionstemperatur von ca. 150°C, eine Verarbeitungszeit von ca. 15 min und eine Aushärtungszeit bis zur Klebfreiheit von ca. 1,5 Stunden erhalten wurde.

Als Polyurethanharz wurde UREOL 6426 A/B (Hersteller: CIBAGEIGY) ohne Füllstoffe mit einer Viskosität von 600 mPa·s bei 23°C verwendet. Die Verarbeitung erfolgte durch Vermischen der Komponenten A und B im Gewichtsverhältnis 1 : 1, wobei eine maximale Reaktionstemperatur von ca. 90°C, eine Verarbeitungszeit von ca. 7 min und eine Aushärtungszeit bis zur Klebfreiheit von ca. 45 min erhalten wurde.

Beurteilungskriterium für die Ermittlung der Abformhäufigkeit war die einwandfreie Wiedergabe der Modellstrukturen, d.h. es durften weder Abrisse von filigranen Formteilen bzw. Ausrisse aus der Formoberfläche noch Risse in der Hautform selbst aufgetreten sein. Als Wert für die Abformhäufigkeit wurde die Zahl der Harzgießlinge genommen, bis zu der keinerlei Beschädigung der Form oder des Gießlings erkennbar war.

Die Abformhäufigkeitswerte, die mit den aus der Masse von Vergleich 1a hergestellten Formen mit den beiden Gießharzen erhalten wurden, sind in Tabelle 1 angegeben.

### Vergleichsbeispiel 1b

Die in Vergleichsbeispiel 1a beschriebene Arbeitsweise wurde wiederholt, mit der Abänderung, daß die Härtermischung aus 6 g Tetraethoxysilan, 2 g Di-n-octylzinndimaleinat und 17 g eines α,ω-Bis(trimethylsiloxy)polydimethylsiloxans mit einer Viskosität von 35 mm²/s bei 23°C bestand.

Die katalysierte Mischung wies eine Viskosität von ca. 23 000 mPa·s und eine Verarbeitungszeit von 20 min bei 23°C auf. Die daraus hergestellten Testformen waren nach 4 h klebfrei ausvulkanisiert und konnten vom Modell abgenommen werden.

Das Vulkanisat wies eine Shore A - Härte von 27 und einen Weiterreißwiderstand nach ASTM 624 B von 18 N/mm auf.

Die Abformhäufigkeitswerte, die mit den aus der Masse von Vergleich 1b hergestellten Formen mit den beiden Gießharzen erhalten wurden, sind in Tabelle 1 angegeben.

### Vergleichsbeispiel 1c

Die in Vergleichsbeispiel 1a beschriebene Arbeitsweise wurde wiederholt, mit der Abänderung, daß die Härtermischung aus 4,1 g Tetra-n-propoxysilan, 3,4 g eines Umsetzungsproduktes von 4 Teilen Tetra-n-propoxysilan mit 1 Teil Di-n-butylzinndiacetat sowie 17,5 g eines α,ω-Bis(trimethylsiloxy)polydimethylsiloxans mit einer Viskosität von 35 mm²/s bei 23°C bestand.

Die katalysierte Mischung wies eine Viskosität von ca. 24 000 mPa·s und eine Verarbeitungszeit von 85 min bei 23°C auf. Die daraus hergestellten Testformen waren nach 12 h klebfrei ausvulkanisiert und konnten vom Modell abgenommen werden.

Das Vulkanisat wies eine Shore A - Härte von 21 und einen Weiterreißwiderstand nach ASTM 624 B von 20 N/mm auf.

Die Abformhäufigkeitswerte, die mit den aus der Masse von Vergleich 1 c hergestellten Formen mit den beiden Gießharzen erhalten wurden, sind in Tabelle 1 angegeben.

### Vergleichsbeispiel 1d

Die in Vergleichsbeispiel 1a beschriebene Arbeitsweise wurde wiederholt, mit der Abänderung, daß die Härtermischung aus 4,1 g Tetra-n-propoxysilan, 3,4 g eines Umsetzungsproduktes von 4 Teilen Tetra-n-propoxysilan mit 1 Teil Di-n-butylzinndiacetat sowie 17,5 g Mineral-Weißöl bestand.

Die katalysierte Mischung wies eine Viskosität von ca. 24 000 mPa·s und eine Verarbeitungszeit von 75 min bei 23°C auf. Die daraus hergestellten Testformen waren nach 10 h klebfrei ausvulkanisiert und konnten vom Modell abgenommen werden.

Das Vulkanisat wies eine Shore A - Härte von 19 und einen Weiterreißwiderstand nach ASTM 624 B von 22 N/mm auf.

Die Abformhäufigkeitswerte, die mit den aus der Masse von Vergleich 1d hergestellten Formen mit den beiden Gießharzen erhalten wurden, sind in Tabelle 1 angegeben.

### Beispiel 1a

Die in Vergleich 1a beschriebene Arbeitsweise wurde wiederholt, mit der Abänderung, daß die Härtermischung aus 6 g Tetraethoxysilan, 2 g Dibutylzinndilaurat, 0,3 g einer Zubereitung aus 85 Teilen Zinkdi-2-ethylhexyldithiophosphat und 15 Teilen eines α,ω-Bis(trimethylsiloxy)polydimethylsiloxans mit einer Viskosität von 100 mm²/s bei 23°C sowie 16,7 g eines α,ω-Bis(trimethylsiloxy)polydimethylsiloxans mit einer Viskosität von 35 mm²/s bei 23°C bestand.

Die katalysierte Mischung wies eine Viskosität von ca. 24 000 mPa·s und eine Verarbeitungszeit von 40 min bei 23°C auf. Die daraus hergestellten Testformen waren nach 6 h klebfrei ausvulkanisiert und konnten vom Modell abgenommen werden.

Das Vulkanisat wies eine Shore A - Härte von 25 und einen Weiterreißwiderstand nach ASTM 624 B von 20 N/mm auf.

Die Abformhäufigkeitswerte, die mit den aus der Masse von Beispiel 1a hergestellten Formen mit den beiden Gießharzen erhalten wurden, sind in Tabelle 1 angegeben.

### Beispiel 1b

Die in Vergleich 1a beschriebene Arbeitsweise wurde wiederholt, mit der Abänderung, daß die Härtermischung aus 6 g Tetraethoxysilan, 2 g Di-n-octylzinndimaleinat, 0,3 g einer Zubereitung aus 85 Teilen Zinkdi-2-ethylhexyldithiophosphat und 15 Teilen Mineral-Weißöl sowie 16,7 g eines α,ω-Bis(trimethylsiloxy)polydimethylsiloxans mit einer Viskosität von 35 mm²/s bei 23°C bestand.

Die katalysierte Mischung wies eine Viskosität von ca. 24 000 mPa·s und eine Verarbeitungszeit von 30 min bei 23°C auf. Die daraus hergestellten Testformen waren nach 5 h klebfrei ausvulkanisiert und konnten vom Modell abgenommen werden.

Das Vulkanisat wies eine Shore A - Härte von 26 und einen Weiterreißwiderstand nach ASTM 624 B von 17 N/mm auf.

Die Abformhäufigkeitswerte, die mit den aus der Masse von Beispiel 1b hergestellten Formen mit den beiden Gießharzen erhalten wurden, sind in Tabelle 1 angegeben.

### Beispiel 1c

Die in Vergleich 1a beschriebene Arbeitsweise wurde wiederholt, mit der Abänderung, daß die Härtermischung aus 4,1 g Tetra-n-propoxysilan, 3,4 g eines Umsetzungsproduktes von 4 Teilen Tetra-n-propoxysilan mit 1 Teil Di-n-butylzinndiacetat, 0,3 g einer Zubereitung aus 85 Teilen Zinkdi-2-ethylhexyldithiophosphat und 15 Teilen Mineral-Weißöl sowie 17,2 g eines α,ω-Bis(trimethylsiloxy)polydimethylsiloxans mit einer Viskosität von 35 mm²/s bei 23°C bestand.

Die katalysierte Mischung wies eine Viskosität von ca. 24 000 mPa·s und eine Verarbeitungszeit von 90 min bei 23°C auf. Die daraus hergestellten Testformen waren nach 14 h klebfrei ausvulkanisiert und konnten vom Modell abgenommen werden.

Das Vulkanisat wies eine Shore A - Härte von 20 und einen Weiterreißwiderstand nach ASTM 624 B von 19 N/mm auf.

Die Abformhäufigkeitswerte, die mit den aus der Masse von Beispiel 1 c hergestellten Formen mit den beiden Gießharzen erhalten wurden, sind in Tabelle 1 angegeben.

### Beispiel 1d

Die in Vergleichsbeispiel 1a beschriebene Arbeitsweise wurde wiederholt, mit der Abänderung, daß die Härtermischung aus 4,1 g Tetra-n-propoxysilan, 3,4 g eines Umsetzungsproduktes von 4 Teilen Tetra-n-propoxysilan mit 1 Teil Di-n-butylzinndiacetat, 0,6 g einer Zubereitung aus 85 Teilen Zinkdi-2-ethylhexyldithiophosphat und 15 Teilen Mineral-Weißöl sowie 16,9 g eines α,ω-Bis(trimethylsiloxy)polydimethylsiloxans mit einer Viskosität von 35 mm²/s bei 23°C bestand.

Die katalysierte Mischung wies eine Viskosität von ca. 24 000 mPa·s und eine Verarbeitungszeit von 100 min bei 23°C auf. Die daraus hergestellten Testformen waren nach 16 h klebfrei ausvulkanisiert und konnten vom Modell abgenommen werden.

Das Vulkanisat wies eine Shore A - Härte von 20 und einen Weiterreißwiderstand nach ASTM 624 B von 18 N/mm auf.

Die Abformhäufigkeitswerte, die mit den aus der Masse von Beispiel 1d hergestellten Formen mit den beiden Gießharzen erhalten wurden, sind in Tabelle 1 angegeben.

### Beispiel 1e

Die in Vergleichsbeispiel 1a beschriebene Arbeitsweise wurde wiederholt, mit der Abänderung, daß die Härtermischung aus 4,1 g Tetra-n-propoxysilan, 3,4 g eines Umsetzungsproduktes von 4 Teilen Tetra-n-propoxysilan mit 1 Teil Di-n-butylzinndiacetat, 0,1 g einer Zubereitung aus 85 Teilen Zinkdi-2-ethylhexyldithiophosphat und 15 Teilen Mineral-Weißöl sowie 17,4 g eines α,ω-Bis(trimethylsiloxy)polydimethylsiloxans mit einer Viskosität von 35 mm²/s bei 23°C bestand.

Die katalysierte Mischung wies eine Viskosität von ca. 24 000 mPa·s und eine Verarbeitungszeit von 100 min bei 23°C auf. Die daraus hergestellten Testformen waren nach 16 h klebfrei ausvulkanisiert und konnten vom Modell abgenommen werden.

Das Vulkanisat wies eine Shore A - Härte von 20 und einen Weiterreißwiderstand nach ASTM 624 B von 19 N/mm auf.

Die Abformhäufigkeitswerte, die mit den aus der Masse von Beispiel 1 e hergestellten Formen mit den beiden Gießharzen erhalten wurden, sind in Tabelle 1 angegeben.

### Beispiel 1f

Die in Vergleichsbeispiel 1a beschriebene Arbeitsweise wurde wiederholt, mit der Abänderung, daß die Härtermischung aus 4,1 g Tetra-n-propoxysilan, 3,4 g eines Umsetzungsproduktes von 4 Teilen Tetra-n-propoxysilan mit 1 Teil Di-n-butylzinndiacetat, 0,3 g einer Zubereitung aus 85 Teilen Zinkdi-2-ethylhexyldithiophosphat und 15 Teilen Mineral-Weißöl sowie 17,2 g Mineral-Weißöl bestand.

Die katalysierte Mischung wies eine Viskosität von ca. 24 000 mPa·s und eine Verarbeitungszeit von 85 min bei 23°C auf. Die daraus hergestellten Testformen waren nach 14 h klebfrei ausvulkanisiert und konnten vom Modell abgenommen werden.

Das Vulkanisat wies eine Shore A - Härte von 20 und einen Weiterreißwiderstand nach ASTM 624 B von 19 N/mm auf.

Die Abformhäufigkeitswerte, die mit den aus der Masse von Beispiel 1f hergestellten Formen mit den beiden Gießharzen erhalten wurden, sind in Tabelle 1 angegeben.

### Beispiel 1g

Die in Vergleichsbeispiel 1a beschriebene Arbeitsweise wurde wiederholt, mit der Abänderung, daß die Härtermischung aus 4,1 g Tetra-n-propoxysilan, 3,4 g eines Umsetzungsproduktes von 4 Teilen Tetra-n-propoxysilan mit 1 Teil Di-n-butylzinndiacetat, 0,2 einer Zubereitung aus 45 Teilen 2,6-Di-t-butylphenol, 0,5 Teilen N-Phenylbenzylamin und 54,5 Teilen Mineral-Weißöl sowie 17,2 g eines α,ω-Bis(trimethylsiloxy)polydimethylsiloxans mit einer Viskosität von 35 mm²/s bei 23°C bestand.

Die katalysierte Mischung wies eine Viskosität von ca. 24 000 mPa·s und eine Verarbeitungszeit von 110 min bei 23°C auf. Die daraus hergestellten Testformen waren nach 16 h klebfrei ausvulkanisiert und konnten vom Modell abgenommen werden.

Das Vulkanisat wies eine Shore A - Härte von 20 und einen Weiterreißwiderstand nach ASTM 624 B von 21 N/mm auf.

Die Abformhäufigkeitswerte, die mit den aus der Masse von Beispiel 1g hergestellten Formen mit den beiden Gießharzen erhalten-wurden, sind in Tabelle 1 angegeben.

### Beispiel 1h

Die in Vergleichsbeispiel 1a beschriebene Arbeitsweise wurde wiederholt, mit der Abänderung, daß die Härtermischung aus 4,1 g Tetra-n-propoxysilan, 3,4 g eines Umsetzungsproduktes von 4 Teilen Tetra-n-propoxysilan mit 1 Teil Di-n-butylzinndiacetat, 0,3 g einer Zubereitung aus 85 Teilen Zinkdi-2-ethylhexyldithiophosphat und 15 Teilen Mineral-Weißöl, 0,2 g einer Zubereitung aus 45 Teilen 2,6-Di-t-butylphenol, 0,5 Teilen N-Phenylbenzylamin und 54,5 Teilen Mineral-Weißöl sowie 17 g eines α,ω-Bis(trimethylsiloxy)polydimethylsiloxans mit einer Viskosität von 35 mm²/s bei 23°C bestand.

Die katalysierte Mischung wies eine Viskosität von ca. 24 000 mPa·s und eine Verarbeitungszeit von 140 min bei 23°C auf. Die daraus hergestellten Testformen waren nach 24 h klebfrei ausvulkanisiert und konnten vom Modell abgenommen werden.

Das Vulkanisat wies eine Shore A - Härte von 20 und einen Weiterreißwiderstand nach ASTM 624 B von 20 N/mm auf.

Die Abformhäufigkeitswerte, die mit den aus der Masse von Beispiel 1h hergestellten Formen mit den beiden Gießharzen erhalten wurden, sind in Tabelle 1 angegeben.

### Beispiel 1i

Die in Vergleichsbeispiel 1a beschriebene Arbeitsweise wurde wiederholt, mit der Abänderung, daß die Härtermischung aus 4,1 g Tetra-n-propoxysilan, 3,4 g eines Umsetzungsproduktes von 4 Teilen Tetra-n-propoxysilan mit 1 Teil Di-n-butylzinndiacetat, 0,35 g einer Zubereitung aus 75 Teilen Zinkdiphenyldithiophosphat und 25 Teilen Mineral-Weißöl sowie 17,2 g eines α,ω-Bis(trimethylsiloxy)polydimethylsiloxans mit einer Viskosität von 35 mm²/s bei 23°C bestand.

Die katalysierte Mischung wies eine Viskosität von ca. 24 000 mPa·s und eine Verarbeitungszeit von 110 min bei 23°C auf. Die daraus hergestellten Testformen waren nach 16 h klebfrei ausvulkanisiert und konnten vom Modell abgenommen werden.

Das Vulkanisat wies eine Shore A - Härte von 20 und einen Weiterreißwiderstand nach ASTM 624 B von 19 N/mm auf.

Die Abformhäufigkeitswerte, die mit den aus der Masse von Beispiel 1i hergestellten Formen mit den beiden Gießharzen erhalten wurden, sind in Tabelle 1 angegeben.

Wie die Daten der Tabelle 1 zeigen, werden mit den die erfindungsgemäßen Additive enthaltenden Siliconkautschuk-Zubereitungen von Beispiel 1 deutlich, im Schnitt um 50 % höhere Abformzahlen gegenüber beiden Gießharz-Arten erreicht. Dabei spielt weder die Art des Organozinnkatalysators noch jene des Streckungsmittels in der Härterkomponente (letzteres dient dazu, die von den Verarbeitern bevorzugte Dosiermenge von 5 Gew.- % an Härterkomponente zu erreichen) eine wesentliche Rolle. Die höchste Anzahl an Abformungen für beide Gießharze wird mit Additiv A (Beispiel 1 c) erhalten. Eine Verdoppelung der Zusatzmenge an Additiv A bringt keine weitere Verbesserung, wie Beispiel 1 d zeigt. Wird jedoch die Zusatzmenge um 60 % verringert (Beispiel 1e), gehen die erreichbaren Abformzahlen deutlich zurück. Die Additive B und C erweisen sich als etwas weniger wirksam als Additiv A. Auch die Kombination der Additive A und B ermöglicht gegenüber dem alleinigen Einsatz von Additiv A keine Verbesserung (Beispiel 1h). Daß der Zusatz eines Mineral-Weißöles, also einer additivfreien Mineralölzubereitung, allein, d. h. ohne die erfindungsgemäßen Additive, keineswegs erhöhte Abformzahlen ergibt, zeigt Vergleich 1d.

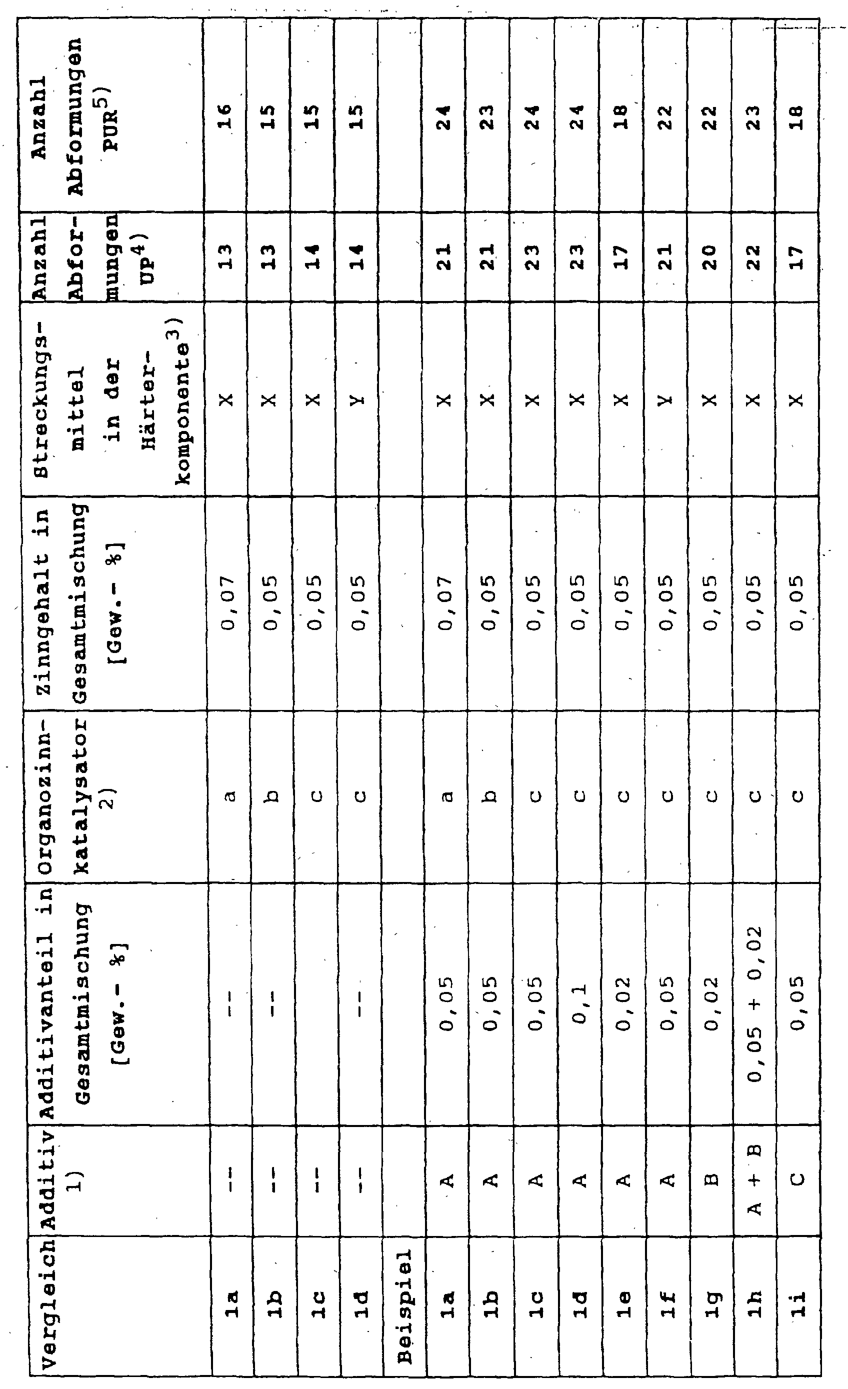

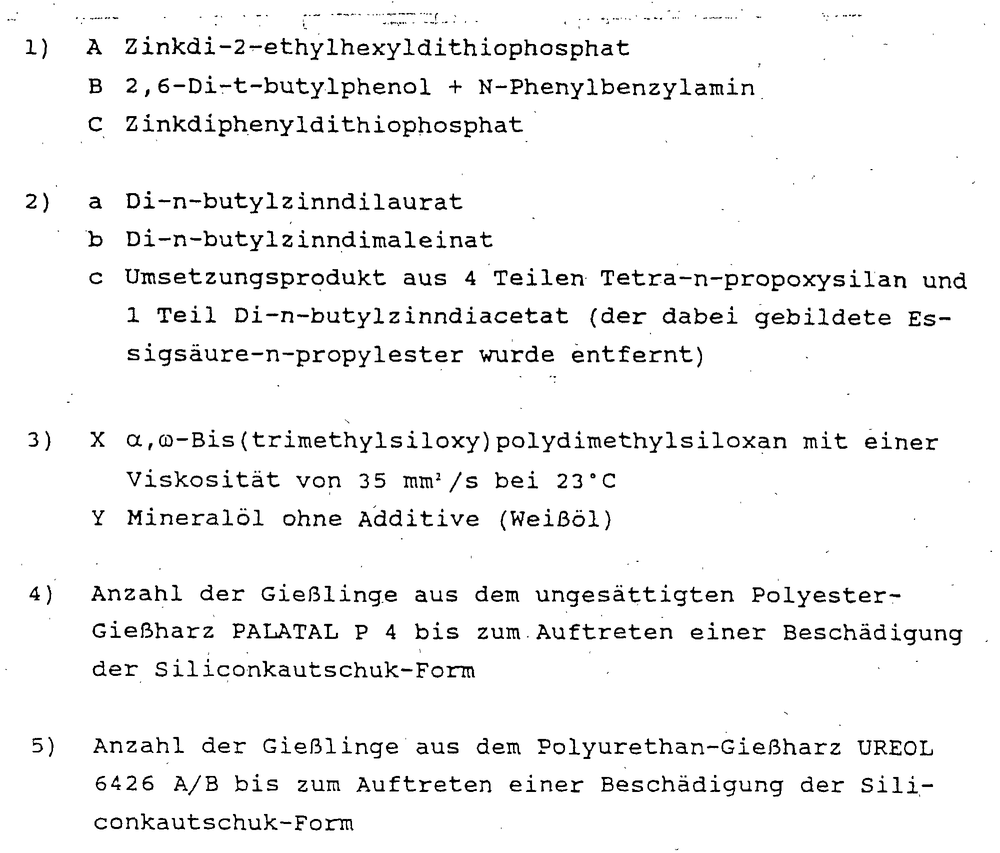

### Vergleichsbeispiel 2

2000 g eines α,ω-Dihydroxypolydimethylsiloxans mit einer Viskosität von 20 000 mPa·s bei 23°C, 1000 g eines α,ω-Bis(trimethylsil- oxy)polydimethylsiloxans mit einer Viskosität von 100 mm²/s bei 23°C, 2300 g einer pyrogenen Kieselsäure mit einer BET-Oberfläche von ca. 130 m²/g, 360 g Hexamethyldisilazan und 130g Wasser wurden in einem Kneter unter Stickstoffatmosphäre vermischt und 1 Stunde bei RT sowie 5 Stunden bei 130°C geknetet. Anschließend wurden 1000 g eines α,ω-Dihydroxypolydimethylsiloxans mit einer Viskosität von 80 000 mPa·s bei 23°C und 800 g eines α,ω-Dihydroxypolydimethylsiloxans mit einer Viskosität von 20 000 mPa·s bei 23°C zugemischt.

3700 g dieser Grundmischung wurden in einem Planetenmischer mit 1800 g Quarzmehl mit einer mittleren Partikelgröße von 5µm, 700 g eines α,ω-Dihydroxypolydimethylsiloxans mit einer Viskosität von 20 000 mPa·s bei 23°C, 500 g eines α,ω-Dihydroxypolydimethylsiloxans mit einer Viskosität von 6 000 mPa·s bei 23°C, 2700 g eines α, ω-Bis(trimethylsiloxy)polydimethylsiloxans mit einer Viskosität von 35 mm²/s bei 23°C, 150 g einer Zubereitung aus 75 g gefälltem Titandioxid und 75 g eines α,ω-Bis(trimethylsiloxy)polydimethyl- siloxans mit einer Viskosität von 100 mm²/s bei 23°C, 40 g eines α,ω-Dihydroxypolydimethylsiloxans mit einer Viskosität von 40mm²/s bei 23°C und 15 g einer Wasser/α,ω-Bis(trimethylsiloxy)polydimethylsiloxan-Emulsion mit einem Wasseranteil von 65 % gründlich vermischt. Die resultierende Kautschukmasse wies eine Viskosität von 23 000 mPa·s bei 23°C auf.

In 500 g dieser Kautschukmasse wurden 25 g einer Härtermischung bestehend aus 5 g Tetra-n-propoxysilan, 3,5 g eines Umsetzungsproduktes von 4 Teilen Tetra-n-propoxysilan mit 1 Teil Di-n-butyl-zinndiacetat, 0,2 g Di-n-butylzinndi-2-ethylhexoat sowie 16,3 g eines α,ω-Bis(trimethylsiloxy)polydimethylsiloxans mit einer Viskosität von 35 mm²/s bei 23°C homogen mit einem mechanischen Rührwerk eingemischt.

Die katalysierte Mischung mit einer Viskosität von ca. 20 000 mPa·s und einer Verarbeitungszeit von 50 min bei 23°C wurde bei einem vermindertem Druck von 15 mbar von der eingemischten Luft befreit. Die daraus hergestellten Testformen waren nach 7 h klebfrei ausvulkanisiert und konnten vom Modell abgenommen werden

Das Vulkanisat wies eine Shore A - Härte von 15 und einen Weiterreißwiderstand nach ASTM 624 B von 18 N/mm auf.

Die Herstellung der Testformen und die Vorgangsweise zur Ermittlung der Abformhäufigkeit entsprach genau der bei Vergleich 1 a beschriebenen Prozedur. Allerdings wurde nur die Abformhäufigkeit gegenüber dem ungesättigten Polyesterharz geprüft.

Der Abformhäufigkeitswert, der mit der aus der Masse von Vergleich 2 hergestellten Form mit dem Polyester-Gießharz erhalten wurde, ist in Tabelle 2 angegeben.

### Beispiel 2a

Die in Vergleichsbeispiel 2 beschriebene Arbeitsweise wurde wiederholt, mit der Abänderung, daß die Härtermischung aus 5 g Tetra-n-propoxysilan, 3,5 g eines Umsetzungsproduktes von 4 Teilen Tetra-n-propoxysilan mit 1 Teil Di-n-butylzinndiacetat, 0,2 g Di-n-butylzinn-di-2-ethylhexoat, 0,3 g einer Zubereitung aus 85 Teilen Zinkdi-2-ethylhexyldithiophosphat und 15 Teilen Mineral- Weißöl sowie 16 g eines α,ω-Bis(trimethylsiloxy)polydimethylsiloxans mit einer Viskosität von 35 mm²/s bei 23°C bestand.

Die katalysierte Mischung wies eine Viskosität von ca. 20 000 mPa·s und eine Verarbeitungszeit von 60 min bei 23°C auf. Die daraus hergestellten Testformen waren nach 8 h klebfrei ausvulkanisiert und konnten vom Modell abgenommen werden.

Das Vulkanisat wies eine Shore A - Härte von 15 und einen Weiterreißwiderstand nach ASTM 624 B von 18 N/mm auf.

Der Abformhäufigkeitswert, der mit der aus der Masse von Beispiel 2a hergestellten Form mit dem Polyester-Gießharz erhalten wurde, ist in Tabelle 2 angegeben.

### Beispiel 2b

Die in Vergleichsbeispiel 2 beschriebene Arbeitsweise wurde wiederholt, mit der Abänderung, daß die Kautschukmasse aus 3700 g Grundmischung, 1800 g Quarzmehl mit einer mittleren Partikelgröße von 5 µm, 700 g eines α,ω-Dihydroxypolydimethylsiloxans mit einer Viskosität von 20 000 mPa·s bei 23°C, 500 g eines α,ω-Dihydroxypolydimethylsiloxans mit einer Viskosität von 6 000 mPa·s bei 23°C, 2700 g eines α,ω-Bis(trimethylsiloxy)polydimethylsiloxans mit einer Viskosität von 35 mm²/s bei 23°C, 150 g einer Zubereitung aus 75 g gefälltem Titandioxid und 75 g eines α,ω-Bis(trimethylsiloxy)polydimethylsiloxans mit einer Viskosität von 100 mm²/s bei 23°C, 5,8 g einer Zubereitung aus 85 Teilen Zink- di-2-ethylhexyldithiophosphat und 15 Teilen Mineral-Weißöl, 40 g eines α,ω-Dihydroxypolydimethylsiloxans mit einer Viskosität von 40 mm²/s bei 23°C und 15 g einer Wasser/α,ω-Bis(trimethylsiloxy)- polydimethylsiloxan-Emulsion mit einem Wasseranteil von 65 % bestand. Die resultierende Kautschukmasse wies eine Viskosität von 23 000 mPa·s bei 23°C auf.

Die katalysierte Mischung wies eine Viskosität von ca. 20 000 mPa·s und eine Verarbeitungszeit von 55 min bei 23°C auf. Die daraus hergestellten Testformen waren nach 8 h klebfrei ausvulkanisiert und konnten vom Modell abgenommen werden.

Das Vulkanisat wies eine Shore A - Härte von 15 und einen Weiterreißwiderstand nach ASTM 624 B von 18 N/mm auf.

Der Abformhäufigkeitswert, der mit der aus der Masse von Beispiel 2b hergestellten Form mit dem Polyester-Gießharz erhalten wurde, ist in Tabelle 2 angegeben.

Wie die Daten der Tabelle 2 zeigen, werden mit den eines der erfindungsgemäßen Additive enthaltenden Siliconkautschuk-Zubereitungen von Beispiel 2 um 100 % höhere Abformzahlen gegenüber dem Polyester-Gießharz erreicht. Dabei spielt es keine Rolle, ob das erfindungsgemäße Additiv Bestandteil der Kautschukmasse oder der Härtermischung ist.

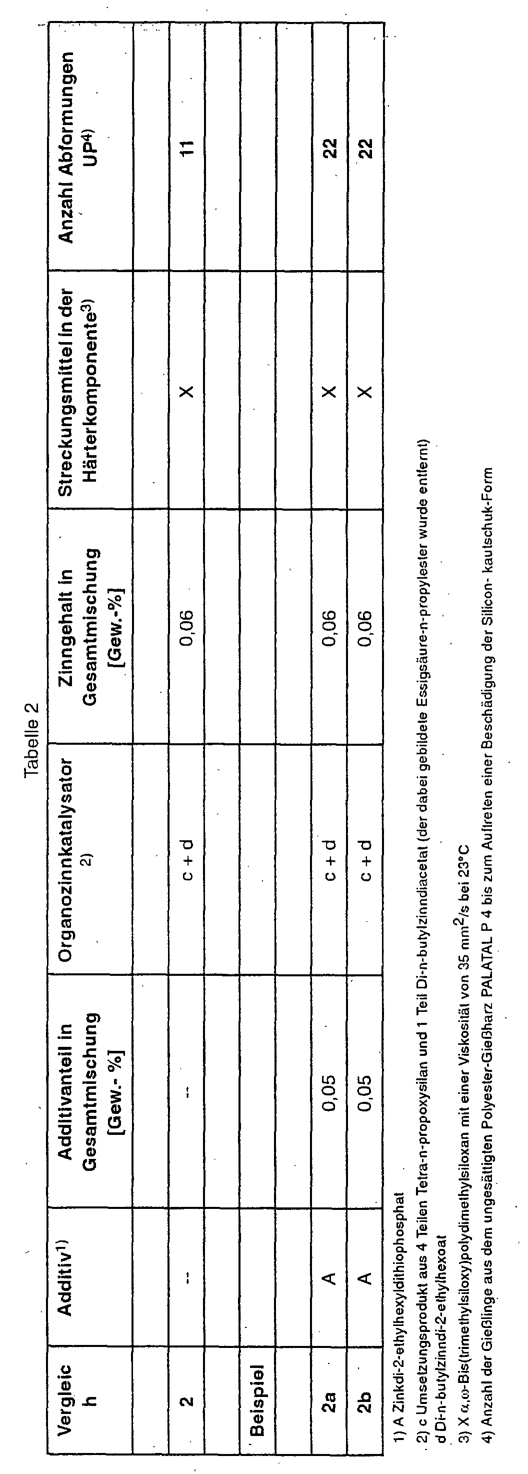

## Patentansprüche

1. Bei Raumtemperatur vulkanisierende, kondensationsvernetzende Siliconkautschuk-Massen, **dadurch gekennzeichnet, daß** die Siliconkautschuk-Massen A, die Siliconmassen
a) α,ω - Dihydroxypolydiorganosiloxane der allgemeinen Formel
HO - [R₂SiO]ₙ - H
wobei n > 10, und R ein organischer Rest ist,
b) Vernetzer
(i) Silane der allgemeinen Formel
R¹ ₐSi(OR²)₄₋ₐ
wobei a = 0 oder 1, R¹ ein einwertiger Kohlenwasserstoffrest mit 1 - 8 Kohlenstoffatomen und R² ein einwertiger Kohlenwasserstoffrest mit 1 - 4 Kohlenstoffatomen ist,
und/oder
(ii)teilhydrolysierte Produkte von Silanen, wie unter (i) aufgeführt,
wobei a = 0 oder 1, enthaltend Einheiten ausgewählt aus der Gruppe der allgemeinen Formeln
(R²O)₃SiO_{0,5}, (R²O)₂SiO, (R²O)SiO_{1,5} und SiO₂
wobei R² die unter (i) angegebene Bedeutung hat,
c) Katalysatoren enthalten
sowie Zusatzstoffe B enthalten, die aus der Gruppe ausgewählt werden, die aus sterisch gehinderten Phenolen, sterisch gehinderten Bisphenolen, sterisch gehinderten Thiobisphenolen, Zinkdialkyldithiophosphaten, Zinkdiaryldithiophosphaten, aromatischen Aminen oder Zubereitungen, die die zuvor erwähnten Stoffe enthalten, besteht, wobei diese Zusatzstoffe einzeln oder in beliebigen Mischungen und Mischungsverhältnissen miteinander in den Massen A enthalten sind.

2. Bei Raumtemperatur vulkanisierende kondensationsvernetzende Siliconkautschuk-Massen nach Anspruch 1 , **dadurch gekennzeichnet, daß** es sich bei den sterisch gehinderten Phenolen, sterisch gehinderten Bisphenolen und sterisch gehinderten Thiobisphenolen um solche ausgewählt aus der Gruppe von 2,6-Di-t-butylphenol, 2,6-Di-t-butyl-4-methylphenol, Octadecyl-3,5-di-t-butyl-4-hydroxyhydrocinnamat, 4,4'-Methylen-bis(2,6-di-tbutylphenol), 2,2'-Methylen-bis(4-methyl-6-t-butylphenol), Monomethacrylat-ester von 2,2'-Methylen-bis(4-methyl-6-tbutylphenol), 1,3,5-Trimethyl-2,4,6-tris(3,5-di-t-butyl-4-hydroxybenzyl)- benzol und 4,4'-Thio-bis(4,6-di-tbutylphenol) handelt.

3. Bei Raumtemperatur vulkanisierende, kondensationsvernetzende Siliconkautschuk-Massen nach Anspruch 1, **dadurch gekennzeichnet, daß** es sich bei den Zinkdialkyldithiophosphaten oder Zinkdiaryldithiophosphaten um solche der allgemeinen Formel
Zn[S-P(S)-(OR³)₂)]₂
wobei R³ ein einwertiger Kohlenwasserstoffrest mit 1 - 14 Kohlenstoffatomen ist, handelt.

4. Bei Raumtemperatur vulkanisierende kondensationsvernetzende Siliconkautschuk-Massen nach Anspruch 1, **dadurch gekennzeichnet, daß** es sich bei den aromatischen Aminen um solche ausgewählt aus der Gruppe von N-Phenylbenzylamin, N-Phenyl-1-naphtylamin, 4,4'-Di(α,α'-dimethylbenzyl)diphenylamin, 4,4'-Di(2,4,4-Trimethylpentyl)diphenylamin, N,N'-Diphenyl-1,4-phenylendiamin, N-Phenyl-N'-(1,3-Dimethyl- butyl)-1,4-phenylendiamin und (4-Anilinophenyl)methacrylat, handelt.

5. Verfahren zur Herstellung von bei Raumtemperatur vulkanisierenden, kondensationsvernetzenden Siliconkautschuk Massen nach einem oder mehreren der Ansprüche 1 bis 4, **dadurch gekennzeichnet, daß** die Bestandteile A (a-c) und B vermischt werden.

6. Verwendung der bei Raumtemperatur vulkanisierenden, kondensationsvernetzenden Siliconkautschuk-Massen nach einem oder mehreren der Ansprüche 1 bis 4 oder hergestellt nach Anspruch 5 zur Herstellung von Formen.

7. Negativformen aus bei Raumtemperatur vulkanisierenden, kondensationsvernetzenden Siliconkautschuk-Massen nach einem oder mehreren der Ansprüche 1 bis 4 oder hergestellt nach Anspruch 5.

## Claims

1. Condensation-crosslinking, room-temperature vulcanizing silicone rubber compositions, **characterized in that** the silicone rubber compositions A comprise the silicone materials
a) α,ω-dihydroxypolydiorganosiloxanes of the general formula
HO - [R₂SiO]ₙ - H
wherein n > 10 and R is an organic radical,
b) crosslinkers
(i) silanes of the general formula
R¹ ₐSi(OR²)₄₋ₐ
wherein a = 0 or 1, R¹ is a univalent hydrocarbon radical having 1 - 8 carbon atoms and R² is a univalent hydrocarbon radical having 1 - 4 carbon atoms,
and/or
(ii) partially hydrolysed products of silanes as listed under (i),
wherein a = 0 or 1, comprising units selected from the group of the general formulae
(R²O)₃SiO_{0.5}, (R²O)₂SiO, (R²O)SiO_{1.5} and SiO₂
wherein R² has the meaning specified under (i),
c) catalysts,
and also additives B selected from the group consisting of sterically hindered phenols, sterically hindered bisphenols, sterically hindered thiobisphenols, zinc dialkyl dithiophosphates, zinc diaryl dithiophosphates, aromatic amines or preparations containing the abovementioned substances, these additives being present in the compositions A either individually or in any mixtures and mixing ratios with respect to one another.

2. Condensation-crosslinking, room-temperature vulcanizing silicone rubber compositions according to Claim 1, **characterized in that** the sterically hindered phenols, sterically hindered bisphenols and sterically hindered thiobisphenols are those selected from the group consisting of 2,6-di-t-butylphenol, 2,6-di-t-butyl-4-methylphenol, octadecyl 3,5-di-t-butyl-4-hydroxy- hydrocinnamate, 4,4'-methylene-bis(2,6-di-t-butyl- phenol), 2,2'-methylene-bis(4-methyl-6-t-butylphenol), monomethacrylate esters of 2,2'-methylene-bis(4-methyl-6-t-butylphenol), 1,3,5-trimethyl-2,4,6-tris(3,5-di-t-butyl-4-hydroxybenzyl) benzene and 4,4'-thio-bis(4,6-di-t-butylphenol).

3. Condensation-crosslinking, room-temperature vulcanizing silicone rubber compositions according to Claim 1, **characterized in that** the zinc dialkyl dithiophosphates or zinc diaryl dithiophosphates are those of the general formula
Zn[S-P(S)-(OR³)₂)]₂
wherein R³ is a univalent hydrocarbon radical having 1 - 14 carbon atoms.

4. Condensation-crosslinking, room-temperature vulcanizing silicone rubber compositions according to Claim 1, **characterized in that** the aromatic amines are those selected from the group consisting of N-phenylbenzylamine, N-phenyl-1-naphthylamine, 4,4'-di(α,α'-dimethylbenzyl)diphenylamine, 4,4'-di(2,4,4-trimethylpentyl)diphenylamine, N,N'-diphenyl-1,4-phenylenediamine, N-phenyl-N'-(1,3-dimethylbutyl)-1,4-phenylenediamine and (4-anilinophenyl) methacrylate.

5. Method of preparing condensation-crosslinking, room-temperature vulcanizing silicone rubber compositions according to one or more of Claims 1 to 4, **characterized in that** the constituents A (a-c) and B are mixed.

6. Use of the condensation-crosslinking, room-temperature vulcanizing silicone rubber compositions according to one or more of Claims 1 to 4, or prepared according to Claim 5, for making moulds.

7. Female mould made of condensation-crosslinking, room-temperature vulcanizing silicone rubber compositions according to one or more of Claims 1 to 4 or produced according to Claim 5.

## Revendications

1. Compositions de caoutchouc de silicone vulcanisant à température ambiante et réticulant par condensation, **caractérisées en ce que** les compositions A de caoutchouc de silicone contiennent
a) des α,ω-dihydroxypolydiorganosiloxanes de formule générale
HO-[R₂SiO]ₙ-H
dans laquelle n est > 10 et R est un radical organique;
b) des agents de réticulation
(i) des silanes de formule générale
R¹ ₐSi(OR²)₄₋ₐ
dans laquelle a = 0 ou 1, R¹ est un radical hydrocarboné monovalent avec 1 - 8 atomes de carbone et R² est un radical hydrocarboné monovalent avec 1 - 4 atomes de carbone
et/ou
(ii) des produits de silanes partiellement hydrolysés, tels qu'ils sont énumérés en (i), dans lesquels a = 0 ou 1, contenant des unités choisies parmi le groupe de formules générales
(R²O)₃SiO_{0.5}, (R²O)₂SiO, (R²O)SiO_{1.5} et SiO₂
dans lesquelles R² a la signification donnée en (i),
c) des catalyseurs,
ainsi que des additifs B qui sont choisis parmi le groupe composé de phénols stériquement encombrés, de bisphénols stériquement encombrés, de thiobisphénols stériquement encombrés, de dialkyldithiophosphates de zinc, de diaryldithiophosphates de zinc, d'amines aromatiques ou de préparations qui contiennent les substances susmentionnées, ces additifs étant contenus dans les compositions A isolément ou dans de quelconques mélanges et rapports de mélange les uns avec les autres.

2. Compositions de caoutchouc de silicone vulcanisant à température ambiante et réticulant par condensation suivant la revendication 1, **caractérisées en ce que** les phénols stériquement encombrés, les bisphénols stériquement encombrés et les thiobisphénols stériquement encombrés sont ceux choisis parmi le groupe des 2,6-di-t-butylphénol, 2,6-di-t-butyl-4-méthylphénol, 3,5-di-t-butyl-4-hydroxyhydrocinnamate d'octadécyle, 4,4'-méthylène-bis(2,6-di-t-butylphénol), 2,2'-méthylène-bis(4-méthyl-6-t-butylphénol), ester de monométhacrylate de 2,2'-méthylène-bis(4-méthyl-6-t-butylphénol), 1,3,5-triméthyl-2,4,6-tris(3,5-di-t-butyl-4-hydroxybenzyl)benzène et 4,4'-thio-bis-(4,6-di-t-butylphénol).

3. Compositions de caoutchouc de silicone vulcanisant à température ambiante et réticulant par condensation suivant la revendication 1, **caractérisées en ce que** les dialkyldithiophosphates de zinc ou diaryldithiophosphates de zinc sont ceux de formule générale
Zn[S-P(S)-(OR³)₂)]₂
dans laquelle R³ est un radical hydrocarboné monovalent avec 1 - 14 atomes de carbone.

4. Compositions de caoutchouc de silicone vulcanisant à température ambiante et réticulant par condensation suivant la revendication 1, **caractérisées en ce que** les amines aromatiques sont celles choisies parmi le groupe de N-phénylbenzylamine, N-phényl-1-naphtylamine, 4,4'-di(α,α'-diméthylbenzyl)diphénylamine, 4,4'-di(2,4,4-triméthylpentyl)diphénylamine, N,N'-diphényl-1,4-phénylènediamine, N-phényl-N'-(1,3-diméthylbutyl)-1,4-phénylènediamine et méthacrylate de (4-anilinophényle).

5. Procédé de préparation de compositions de caoutchouc de silicone vulcanisant à température ambiante et réticulant par condensation suivant l'une ou plusieurs des revendications 1 à 4, **caractérisé en ce que** les composants A (a-c) et B sont mélangés.

6. Utilisation des compositions de caoutchouc de silicone vulcanisant à température ambiante et réticulant par condensation suivant l'une ou plusieurs des revendications 1 à 4 ou préparées suivant la revendication 5, pour la fabrication de moules.

7. Moules négatifs constitués de compositions de caoutchouc de silicone vulcanisant à température ambiante et réticulant par condensation suivant l'une ou plusieurs des revendications 1 à 4 ou préparés suivant la revendication 5.
